# FASCICULE DE BREVET EUROPEEN

(11) **EP 0 868 770 B1**
(45) Date de publication et mention de la délivrance du brevet: **01.12.1999**
(21) Numéro de dépôt: 96943187.3
(22) Date de dépôt: 23.12.1996
(51) Int. Cl.: H02K 16/00, H02K 19/38

(54) **MODULE ELEMENTAIRE POUR MACHINE ELECTRIQUE DE TYPE DISCOIDE ET MACHINE ELECTRIQUE CORRESPONDANTE**
Basiselement für scheibenformige elektrische Maschine und entsprechende elektrische Maschine
BASIC MODULE FOR A DISCOIDAL ELECTRIC MACHINE, AND CORRESPONDING ELECTRIC MACHINE

(30) Priorité: 21.12.1995 FR 9515304
(43) Date de publication de la demande: 07.10.1998
(73) Titulaire: Jeumont Industrie, 92400 Courbevoie (FR)
(72) Inventeur: CANINI, Jean-Marc, F-59149 Aibes (FR); MICHAUX, Raymond, F-59740 Solre-le-Château (FR); MILLET, Yves, F-59600 Assevent (FR)
(74) Mandataire: Corret, Hélène
(86) Numéro de dépôt international: FR9602071
(87) Numéro de publication internationale: WO9723939

(56) Documents cités:
- EP-A- 0 091 125
- WO-A-94/22204
- FR-A- 2 583 231
- US-A- 4 514 653
- US-A- 4 866 321
- US-A- 5 229 677

## Description

La présente invention concerne le domaine des machines électriques à structure discoïde.

Ces machines peuvent être synchrones, asynchrones ou à courant continu. Elles fonctionnent en générateur ou en moteur. De façon générale, elles sont constituées d'au moins un disque rotor et un disque stator.

Une telle machine comporte classiquement au moins un stator en forme de disque maintenu sur une carcasse et dont la partie centrale est évidée, ainsi qu'un rotor également en forme de disque, monté sur un arbre dont l'axe de rotation coïncide avec l'axe du disque stator. Cependant, la disposition du disque rotor par rapport au disque stator peut différer d'une machine discoïde à l'autre.

Ainsi, le brevet FR-2 583 231 décrit une machine discoïde comprenant un disque rotor monté en rotation sur l'arbre de la machine et un disque stator relié à la carcasse et centré sur l'axe de l'arbre. Il décrit également une machine discoïde dans laquelle un disque rotor est placé entre deux disques stator. Les bobinages des disques rotor et stator sont placés sur des faces en regard, le disque rotor étant équipé d'aimants ou d'enroulement sur ces deux faces.

On peut également se référer au brevet US-4,514,653 qui décrit une machine électrique de type discoïde, comportant plusieurs disques rotor et plusieurs stators associés.

Le brevet US-5,229,677 décrit quant à lui un moteur de type discoïde pour propulsion marine.

Le document WO-A-94 22204 décrit une machine discoïde comportant un sous-ensemble rotor et un sous-ensemble stator disposés coaxialement. Cette machine n'est cependant pas constituée de modules élémentaires indépendants.

Ces documents montrent que les machines discoïdes connues sont construites pour une puissance donnée. Ainsi, à chaque puissance, correspond une machine particulière comportant un nombre approprié de disques rotor et stator. En conséquence, les composants de la machine et notamment les parties mécaniques telles que la carcasse de protection des moteurs, doivent être conçus et fabriqués pour chaque machine d'une puissance donnée.

Ceci ne permet pas de fabriquer en série les composants de la machine. De plus, à compter de sa commande, la fabrication d'une machine discoïde est relativement longue.

L'invention a pour objet de pallier ces inconvénients en proposant un module élémentaire pour une machine électrique de type discoïde, une machine conçue à partir de tels modules et un procédé de fabrication d'une telle machine.

L'invention a pour objet un module élémentaire indépendant pour machine discoïde tel que décrit dans la revendication 1.

Dans un mode particulier de réalisation, le module élémentaire comporte une portion d'arbre, lesdits sous-ensembles étant centrés sur l'axe de ladite portion d'arbre.

De façon préférée, l'élément de carcasse du module élémentaire comporte une cloison et/ou au moins un bossage sur sa face interne, pour le maintien en position des bobinages statoriques.

Par ailleurs, la machine discoïde selon l'invention comprend au moins un module stator/rotor élémentaire correspondant à une puissance déterminée, et des modules d'extrémité comprend chacun au moins un flasque d'extrémité, lesdits modules élémentaires et d'extrémité étant assemblés mécaniquement de façon à ce qu'ils soient tous centrés sur l'axe de la machine, les éléments de carcasse de chaque module élémentaire étant reliés entre eux et auxdits flasques d'extrémité pour constituer la carcasse de la machine.

Chaque module élémentaire comprend des parties actives (élément de circuit magnétique, élément de circuit électrique ou d'aimant) et un élément de carcasse, qui sont conçus pour s'accoupler avec un module élémentaire adjacent ou un module d'extrémité.

Ainsi, chaque module d'extrémité comporte au moins un flasque d'extrémité, et éventuellement un élément, tel qu'une culasse, permettant le retour du flux magnétique.

En effet, le flux d'entrefer peut être propre à un module élémentaire. Dans ce cas, les disques d'extrémité rotoriques ou statoriques du module élémentaire présentent une réluctance permettant la fermeture des lignes de flux d'un pôle au suivant. Ceci peut notamment être obtenu par des dimensions appropriées ou par l'adjonction d'une culasse.

On peut également envisager qu'un flux d'entrefer donné traverse un ensemble limité de modules.

Dans tous les cas, chaque module d'extrémité ne comporte qu'un flasque d'extrémité.

Dans ces premiers modes de réalisation de la machine, chaque module élémentaire ou chaque ensemble limité de modules est indépendant et peut être alimenté indépendamment.

Par ailleurs, une partie importante du flux d'entrefer peut traverser l'ensemble des modules élémentaires de la machine.

Dans ce cas, chaque module d'extrémité comporte un élément permettant le retour du flux. Cet élément prend notamment la forme d'une culasse qui est fixée sur un disque d'extrémité rotorique ou statorique ou encore, fixée sur le flasque et jointive avec un disque d'extrémité statorique.

Ainsi, une partie importante du flux d'entrefer se referme d'un pôle à l'autre d'un même disque d'extrémité, par l'intermédiaire de cette culasse.

Ce dernier mode de réalisation de la machine permet de diminuer les épaisseurs des disques de chaque module élémentaire, et donc d'obtenir des gains en encombrement et en poids.

Enfin, le flasque d'extrémité de chaque module d'extrémité est généralement équipé d'un palier permettant la libre rotation du sous-ensemble rotor et son centrage sur le stator.

Les modules élémentaires peuvent être placés sur un arbre commun ou comprendre des portions d'arbres reliées entre elles lors de l'assemblage des modules élémentaires.

L'architecture modulaire d'une telle machine de type discoïde permet d'utiliser des éléments identiques, pour un diamètre déterminé et une gamme de puissance donnée.

Cette architecture permet de fabriquer des machines de puissance différente, à partir de modules élémentaires standards. Elle permet donc de réduire à la fois les coûts de fabrication et les délais de livraison des machines. En effet, la fabrication de ces modules indépendants peut être réalisée en série. Par ailleurs, ceux-ci peuvent être disponibles en vue d'un assemblage final, ce qui permet de réduire le délai de fabrication des machines.

Les caractéristiques techniques suivantes peuvent également être prises en considération, selon toutes leurs combinaisons techniquement possibles :
- chaque sous-ensemble stator est lié à la carcasse de la machine tandis que chaque sous-ensemble rotor est lié en rotation avec l'arbre de la machine,
- l'arbre de la machine est d'une seule pièce ou constitué de portions d'arbre liées à chaque module élémentaire, la longueur de l'arbre étant adaptée au nombre de modules élémentaires,
- les enroulements des sous-ensembles stator sont connectés entre eux par des connecteurs fixés sur ou à l'intérieur de la carcasse de la machine et les enroulements des sous-ensembles rotor sont éventuellement fixés à l'arbre de la machine, sur ou à l'intérieur de celui-ci,
- la machine comporte un alternateur d'excitation,
- l'alternateur est du type discoïde,
- l'alternateur d'excitation constitue un module élémentaire comprenant un disque stator centré sur l'axe de la machine, relié à la carcasse et portant des enroulements, d'autres enroulements étant prévus sur un module rotor/stator élémentaire de ladite machine, sur une face du disque rotor en regard du disque stator.

L'invention concerne également un procédé de fabrication de machines électriques modulaires de type discoïde tel que décrit dans la revendication 14.

Le procédé peut également présenter les caractéristiques suivantes prises indépendamment ou en combinaison :
- le procédé consiste également à assembler un élément permettant le retour du flux magnétique,
- les modules élémentaires sont assemblés sur un arbre d'une seule pièce,
- chaque module élémentaire comporte une portion d'arbre, l'assemblage des portions d'arbre étant réalisé lors de l'assemblage des modules,
- le procédé consiste également à assembler un module élémentaire alternateur d'excitation du type discoïde avec au moins un module élémentaire rotor/stator dont le ou les sous-ensemble(s) rotor sont bobinés.

L'invention sera mieux comprise et d'autres buts et avantages de celle-ci apparaîtront plus clairement à la lecture de la description qui suit, faite au regard des dessins annexés, représentant des exemples non limitatifs de réalisation de l'invention et sur lesquels :
- la figure 1 représente une vue schématique en coupe axiale d'un premier exemple de réalisation d'une machine de type discoïde selon l'invention,
- la figure 2 représente une vue éclatée des différents composants de la machine illustrée à la figure 1, avec un premier mode de réalisation d'un module élémentaire conforme à l'invention,
- la figure 3 représente une vue schématique en coupe axiale d'un deuxième mode de réalisation d'un module élémentaire conforme à l'invention,
- la figure 4 est une vue schématique en coupe axiale d'un troisième mode de réalisation d'un module élémentaire conforme à l'invention,
- la figure 5 est une vue schématique en coupe axiale d'un deuxième exemple de réalisation d'une machine de type discoïde selon l'invention,
- la figure 6 est une vue schématique d'une machine selon l'invention comportant un alternateur d'excitation, ladite vue étant en coupe partielle, selon l'axe de la machine.
les éléments communs aux différentes figures seront désignés par les mêmes références.

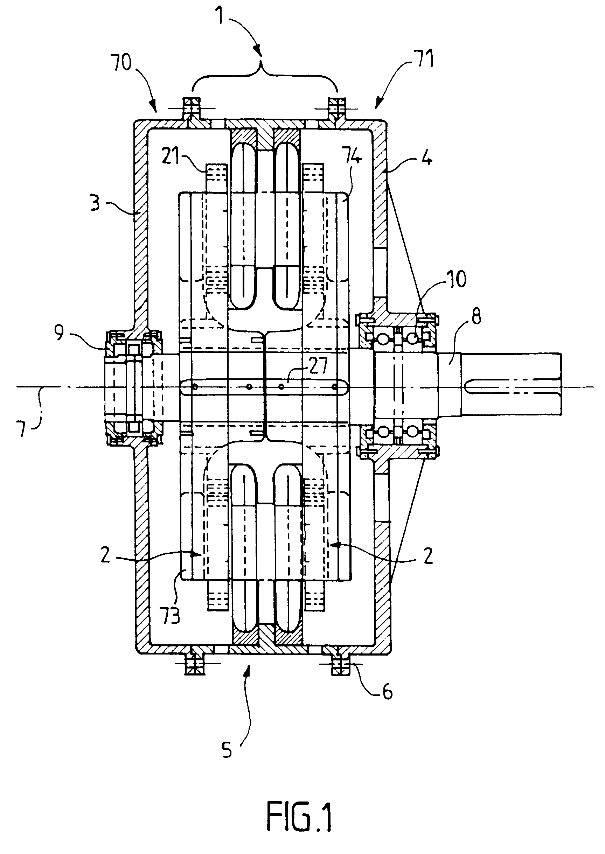

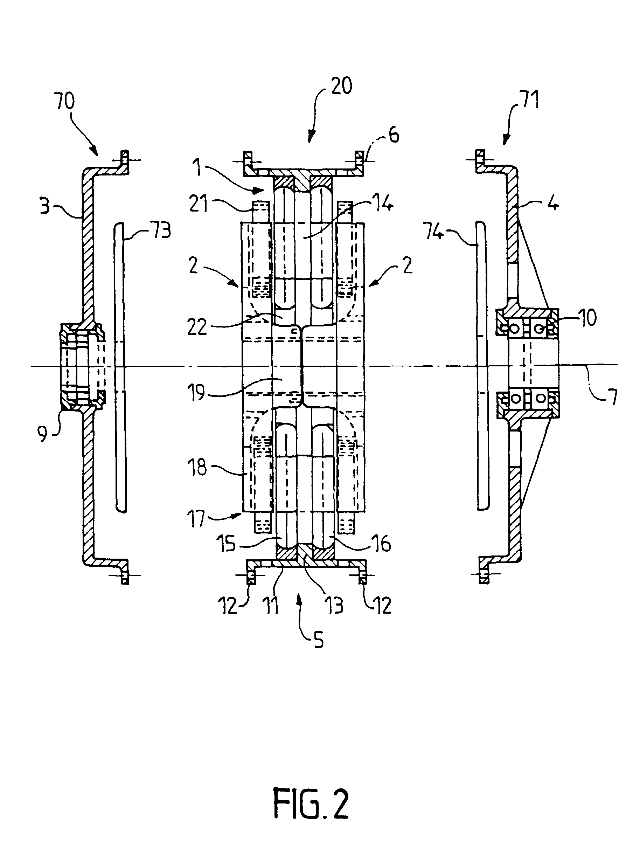

On se réfère tout d'abord aux figures 1 et 2 qui montrent une vue schématique en coupe d'un premier exemple de réalisation d'une machine de type discoïde selon l'invention, la coupe étant réalisée selon l'axe de la machine.

Cette machine est constituée d'un module rotor/stator élémentaire 20, défini pour une puissance nominale déterminée et de deux modules d'extrémité 70, 71.

Chaque modèle d'extrémité 70, 71 comporte un flasque d'extrémité 3, 4 et une culasse 73, 74, notamment en forme d'anneau.

Les flasques d'extrémité assurent la fermeture de la machine et la tenue mécanique de l'arbre 8.

Dans l'exemple illustré aux figures 1 et 2, ce module 20 comprend un premier sous-ensemble 1 constituant le stator de la machine, deux sous-ensembles 2 qui en constituent le rotor et un élément de carcasse 5 lié au sous-ensemble stator 1.

Dans cet exemple de réalisation, les disques d'extrémité sont des disques rotor sur lesquels sont fixées les culasses 73, 74 rotoriques. Si les disques d'extrémité sont des disques stator, les culasses seront statoriques.

Les deux flasques d'extrémité 3 et 4 sont fixés à l'élément de carcasse 5 du sous-ensemble stator 1 par des moyens appropriés qui ne sont pas illustrés sur la figure 1. Ces moyens d'assemblage peuvent notamment être placés selon un axe 6, parallèle à l'axe 7 de la machine.

Chacun des flasques 3, 4 supporte l'arbre 8 de la -machine, par l'intermédiaire de roulements 9, 10.

Les deux sous-ensembles 2 constituant le rotor de la machine sont centrés sur l'axe 7 de l'arbre 8 de la machine.

La carcasse 5 du sous-ensemble stator 1 comprend un élément 11 présentant une forme générale cylindrique ou polygonale.

Cet élément 11 comporte deux brides 12 qui sont rendues solidaires de cet élément par des moyens connus qui ne sont pas représentés sur la figure 2. Elles peuvent notamment être fixées au moyen d'une soudure.

Sur la face interne de l'élément de carcasse 5, c'est-à-dire sur la face en regard de l'arbre 8 de la machine, est fixée une cloison 13, en forme de couronne. Cette cloison 13 peut notamment être fixée par soudure.

Le corps 14 du disque stator comporte une partie centrale évidée 22 et il est fixé sur la cloison 13. Cette fixation peut notamment être réalisée au moyen de boulons qui ne sont pas représentés sur les figures.

Les différents composants du circuit magnétique et notamment les assemblages de tôles feuilletées sont placés sur le corps 14 du stator, selon des techniques connues. Le corps 14 reçoit également les enroulements statoriques 15 et 16. Ces derniers sont maintenus en position grâce à la cloison 13.

Le sous-ensemble stator 1 est centré sur l'axe 7 de l'arbre 8 de la machine qui correspond également à l'axe de rotation du rotor.

Un sous-ensemble rotor 2 est disposé en regard de chacune des faces du sous-ensemble stator 1, c'est-à-dire en regard des enroulements 15 et 16 du stator.

Chaque sous-ensemble rotor 2 comprend un disque 17 présentant un corps 18 en forme de galette et un moyeu central 19.

Le moyeu 19 est alésé de façon à ce que son diamètre interne corresponde sensiblement au diamètre de l'arbre 8 de la machine. Ainsi, les disques rotor 17 peuvent être liés en rotation à l'arbre 8, par l'intermédiaire de clavettes 27.

Sur les figures 1 et 2, les disques rotor 17 sont équipés d'enroulements bobinés 21. Ceux-ci sont disposés en couronne sur la surface du disque rotor, en regard des enroulements 15 et 16 du stator 1.

L'invention s'applique également à une machine dont le rotor est équipé d'aimants permanents également disposés en couronne.

Elle s'applique également à une machine asynchrone ou à courant continu.

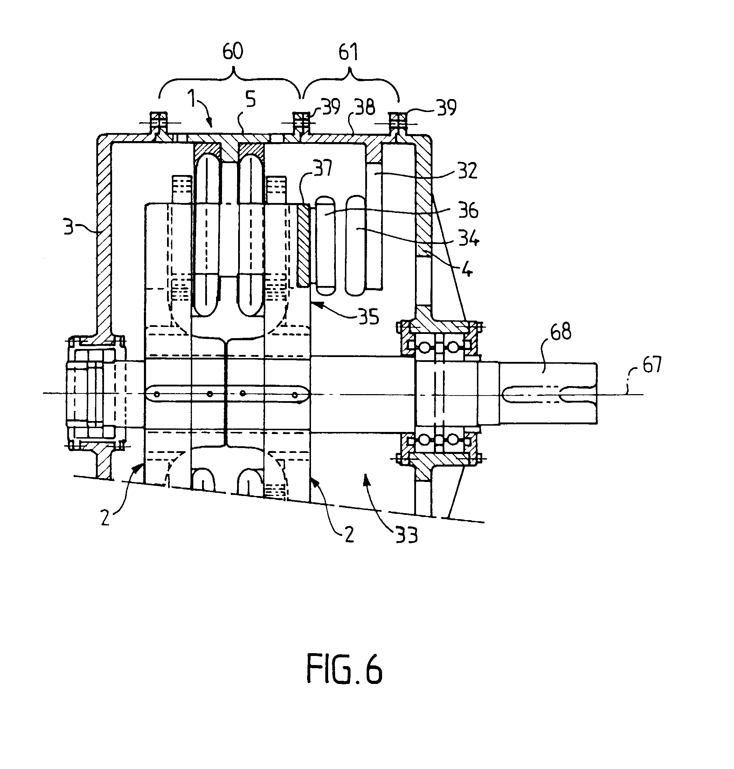

Dans le cas d'un rotor de machine synchrone, équipé d'enroulements, ceux-ci sont parcourus par un courant continu pour magnétiser le rotor. A cet effet, on dispose, en bout d'arbre de la machine, un alternateur d'excitation dont le courant de sortie est redressé. Un tel alternateur sera décrit ultérieurement de façon plus détaillée en référence à la figure 6.

Ainsi, le module rotor/stator élémentaire de la machine principale, représenté sur la figure 1 est fabriqué en assemblant les sous-ensembles rotor 2 de part et d'autre du sous-ensemble stator 1 qui comporte un élément de carcasse 5, les sous-ensembles étant disposés coaxialement.

On réalise la machine représentée aux figures 1 et 2 en fixant les culasses 73, 74 sur les disques rotor 17, lesquelles assurent la fermeture du flux magnétique, et en assemblant les flasques d'extrémité 3 et 4 et l'élément de carcasse 5 du sous-ensemble stator 1. Cet assemblage est réalisé par l'intermédiaire de boulons qui ne sont pas représentés sur les figures. Ces boulons sont placés dans les brides 12 et selon les axes 6, parallèles à l'axe 7 de la machine.

Dans le mode de réalisation illustré aux figures 1 et 2, un module d'extrémité pourrait ne comprendre qu'un flasque d'extrémité, l'épaisseur des disques stator 17 étant alors choisie de façon appropriée.

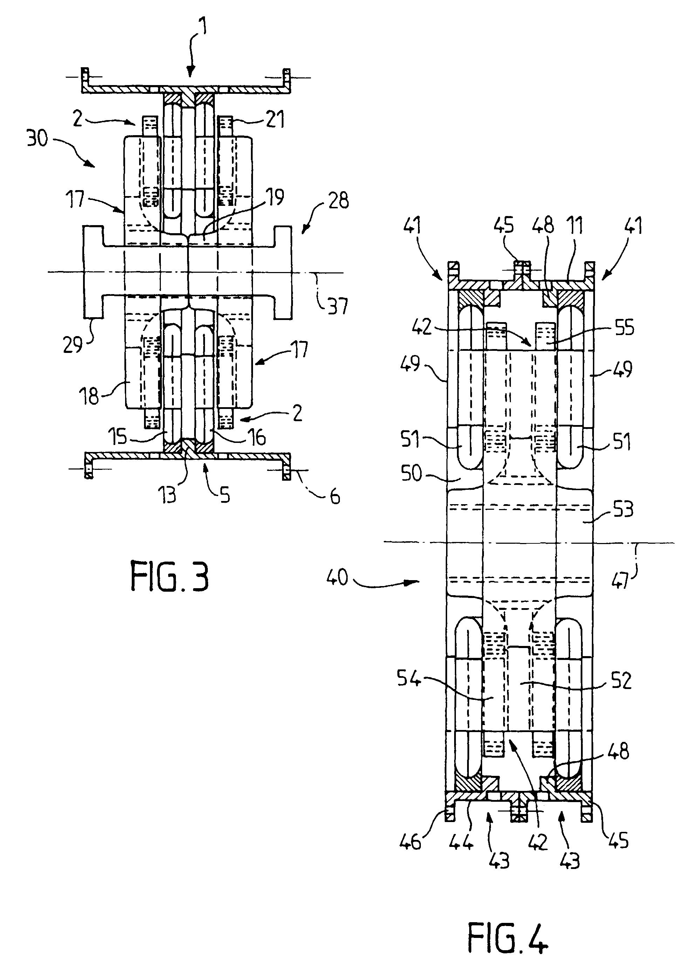

La figure 3 représente un deuxième exemple de module élémentaire selon l'invention 30 comprenant, comme le module 20 des figures 1 et 2, un sous-ensemble stator 1, deux sous-ensembles rotor 2 et un élément de carcasse 5 lié au stator 1.

Dans cet exemple de réalisation, les disques d'extrémité qui sont des disques rotor 17 sont dimensionnés de façon appropriée pour assurer la fermeture du flux principal de la machine dont le module élémentaire fait partie.

Les modules d'extrémité d'une telle machine ne comportent donc qu'un flasque.

Le module 30 comprend également une portion d'arbre 28.

Le module élémentaire 30 est réalisé en centrant le sous-ensemble stator 1 sur la portion d'arbre 28, puis en assemblant les sous-ensembles rotor 2 de part et d'autre du sous-ensemble stator 1. Les sous-ensembles rotor sont également centrés sur l'axe 37 de la portion d'arbre.

La portion d'arbre 28 comporte, à chacune de ses extrémités, un épaulement 29 pour permettre l'assemblage du module 30 avec au moins un autre module comportant également une portion d'arbre.

Cette portion d'arbre pourrait présenter une forme différente de celle illustrée à la figure 3.

La figure 4 représente un troisième exemple 40 de module élémentaire selon l'invention comprenant deux sous-ensembles constituant le stator 41, un sous-ensemble constituant le rotor 42 et deux éléments de carcasse 43, chacun associé à un sous-ensemble stator 41.

On peut également prévoir un seul élément de carcasse commun aux deux sous-ensembles stator 41. Dans ce cas, la bride centrale 45 est supprimée.

Le sous-ensemble rotor 42, comme les deux sous-ensembles stator 41, est centré sur l'axe 47 du module 40.

Le sous-ensemble rotor 42 comporte un disque 52 avec un moyeu central 53.

Dans l'exemple illustré sur la figure 4, le moyeu 53 est alésé pour le passage d'un arbre qui n'est pas représenté.

Le module élémentaire 40 pourrait également être conçu pour comporter une portion d'arbre, comme le module 30.

Le sous-ensemble rotor 42 est équipé, sur chacune de ses faces, d'enroulements bobinés 54 et 55.

Un sous-ensemble stator 41 est disposé en regard de chacune des faces du sous-ensemble rotor 42, et donc en regard de chacun des enroulements 54 et 55.

Chaque élément de carcasse 43 comporte une partie centrale 44 présentant une forme générale cylindrique ou polygonale et deux brides 45 présentant un évidement 46 pour le passage de moyens de fixation.

Sur la face interne de chaque élément de carcasse est de préférence prévu au moins un bossage ou une cloison 48 pour positionner le disque stator 41.

Le corps 49 de chaque disque stator comporte une partie évidée centrale 50. L'élément de carcasse 43 peut être fixé sur le corps 49 par tout moyen approprié.

Le corps 49 reçoit notamment les enroulements statoriques 51.

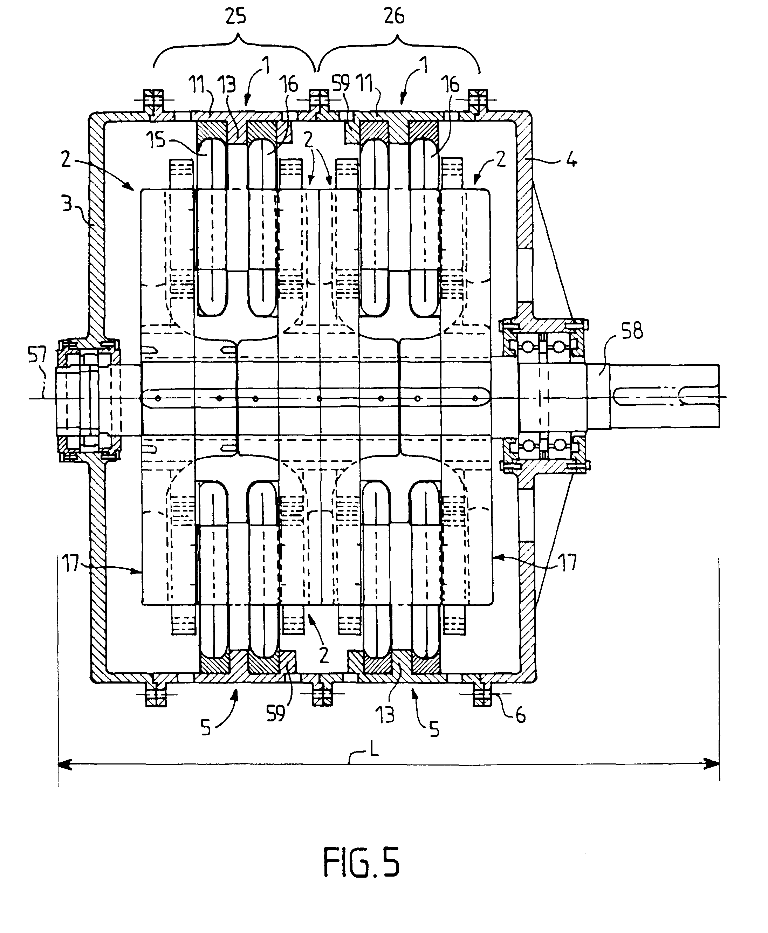

On se réfère maintenant à la figure 5 qui représente une vue en coupe d'une machine conforme à l'invention, constituée de deux modules rotor/stator élémentaires 25, 26 et de deux flasques d'extrémité 3 et 4.

Chacun de ces modules 25, 26 est du même type que le module 20 décrit en référence aux figures 1 et 2.

Ainsi, chaque module élémentaire 25, 26 comporte un sous-ensemble stator 1, deux sous-ensembles rotor 2 et un élément de carcasse 5 lié au sous-ensemble stator 1. Tous les sous-ensembles sont centrés sur l'axe 57 de l'arbre 58 de la machine.

Une cloison 13 est également prévue sur la face interne de chaque élément de carcasse 5. On pourrait aussi prévoir des bossages 59 pour encore mieux maintenir en position les enroulements 15 et 16.

La carcasse de l'ensemble de la machine est réalisée par l'assemblage des flasques d'extrémité 3 et 4 et des éléments de carcasse 5 de chacun des modules élémentaires 25 et 26. Cet assemblage est notamment réalisé au moyen de boulons qui ne sont pas représentés sur la figure 5. Ces boulons sont disposés selon un axe 6, parallèle à l'axe 57 de l'arbre 58 de la machine.

Ainsi, à l'exception de la longueur L, les dimensions de la machine illustrée à la figure 5 qui comporte deux modules rotor/stator 25, 26 sont identiques à celles de la machine illustrée aux figures 1 et 2 et qui ne comporte qu'un seul module rotor/stator 20.

Dans le mode de réalisation illustré à la figure 5, les disques d'extrémité 17 qui sont des disques rotor sont dimensionnés pour assurer la fermeture du flux principal de la machine.

Dans les exemples de machine illustrés aux figures 1, 2 et 5, chaque module élémentaire est constitué de deux sous-ensembles rotors, d'un sous-ensemble stator et d'un élément de carcasse.

L'invention n'est cependant pas limitée à ce type de machine. Une machine discoïde selon l'invention peut également être réalisée à partir de modules élémentaires constitués d'un sous-ensemble rotor et un sous-ensemble stator ou encore d'un sous-ensemble rotor placé entre deux sous-ensembles stator, comme le module 40 illustré à la figure 4.

Par ailleurs, la machine peut être réalisée à partir de modules élémentaires comportant un alésage central pour le passage de l'arbre de la machine comme les modules illustrés sur les figures 1, 2 et 4, ou encore à partir de modules élémentaires comportant chacun une portion d'arbre, comme le module illustré à la figure 3.

De façon générale, la longueur de l'arbre de la machine est au moins égale à la somme des épaisseurs de chaque module élémentaire constituant la machine.

On se réfère maintenant à la figure 6 qui représente une coupe partielle d'une machine selon l'invention, comportant un alternateur d'excitation.

Comme indiqué précédemment, dans le cas d'une machine à rotor bobiné, le rotor est magnétisé en alimentant ses enroulements avec un courant continu. C'est un alternateur d'excitation dont le courant de sortie est redressé qui produit ce courant d'alimentation.

On reconnaît sur la figure 6 un module rotor/stator 60, tel que ceux décrits en référence à la figure 5.

Comme dans les exemples décrits précédemment, ce module rotor/stator 60 est composé d'un sous-ensemble stator 1 et de deux sous-ensembles rotor 2. On se référera aux figures précédentes pour une description détaillée de ces sous-ensembles. Cependant, d'autres types de module élémentaire pourraient être envisagés et l'invention n'est pas limitée à cet exemple.

La machine illustrée à la figure 6 comprend en outre un autre module rotor/stator 61 qui est spécifique à l'alternateur d'excitation.

L'alternateur d'excitation est également de conception discoïde. Il comporte un disque magnétique stator 32 qui présente une partie centrale évidée 33.

Le disque 32 est centré sur l'axe 67 de l'arbre 68 de la machine.

Le disque stator 32 comporte, sur sa face en regard du module rotor/stator 60, des enroulements 34. Ces derniers sont alimentés en courant continu par une source extérieure, non représentée sur la figure 6.

Le rotor du module 61 est constitué par des enroulements 36 qui sont placés sur la face libre du sous-ensemble rotor 2 du module rotor/stator 60, ce sous-ensemble rotor 2 étant en regard du stator 32 du module alternateur 61.

Les enroulements 36 sont ainsi disposés sur une face 35 du disque rotor, en regard du disque stator 32.

Ces enroulements 36 génèrent une force électromotrice alternative qui est redressée par un pont de diode 37, installé par exemple sur le sous-ensemble rotor 2 qui porte les enroulements 36.

On peut également prévoir des fusibles de protection.

Dans ce mode de réalisation, les diodes se trouvent à proximité du circuit d'excitation du module rotor/stator 60 de la machine, ce qui permet d'utiliser des connexions très courtes. De plus, cette disposition favorise la protection mécanique des diodes.

Le disque magnétique stator 32 du module alternateur 61 est relié à un élément de carcasse 38, lequel comporte des brides de fixation 39.

C'est par l'intermédiaire de ces brides de fixation 39 que le disque stator 32 est relié au module rotor/stator 60 ainsi qu'à un des flasques d'extrémité 4 de la machine.

Ainsi, la carcasse de la machine est réalisée par l'assemblage des flasques 3 et 4 et des éléments de carcasse 5 et 38 des modules rotor/stator 60 et alternateur 61.

L'alternateur d'excitation utilisé dans une machine discoïde selon l'invention n'est pas nécessairement du type discoïde, comme celui qui vient d'être décrit. On peut également prévoir un alternateur classique.

Comme indiqué précédemment, la machine illustrée à la figure 3 comprend deux modules tels que celui illustré à la figure 2 et a donc une puissance double de la machine représentée sur la figure 1.

Par exemple, si le module élémentaire 20 représenté à la figure 2 peut fournir une puissance de 100 KW à 500 tours/mn, sous une tension d'alimentation de 1000 V et un courant de 70 A, la machine illustrée à la figure 3 comprenant deux modules de ce type peut fournir une puissance de 200 KW à 500 tours/mn.

Cette machine pourra être alimentée sous 1 000 V et 140 A ou 2 000 V et 70 A, selon que le couplage des bobinages des disques stators de la machine est réalisé en série ou en parallèle.

De même, une machine comprenant trois modules élémentaires de ce type peut fournir une puissance de 300 KW à 500 tours/mn.

Ainsi, pour une gamme de puissance et un diamètre de machine déterminés, la puissance de la machine peut être ajustée en assemblant un nombre approprié de modules rotor/stator élémentaires, de type quelconque.

Cette architecture modulaire peut être appliquée à tout type de machine : à courant continu, synchrone ou asynchrone, à rotor bobiné ou à aimants permanents.

Ces modules élémentaires standards sont fabriqués à partir de sous-ensembles rotor ou stator qui peuvent être fabriqués en série. Cette fabrication peut être partiellement ou totalement automatisée, ce qui diminue les coûts.

Les modules élémentaires présentent un axe de symétrie transversal, de manière à optimiser la standardisation des sous-ensembles constitutifs.

Par ailleurs, les arbres communs, réalisés d'une seule pièce, peuvent être fabriquée en série. Ils présentent une longueur correspondant à un nombre donné de modules, dépendant de la puissance souhaitée pour la machine.

Si la machine doit comporter un alternateur d'excitation, ce dernier peut faire l'objet d'un module spécifique, mais réalisé à partir d'éléments semblables à ceux d'un module standard rotor/stator.

Un module élémentaire peut également inclure une source d'alimentation (convertisseur par exemple ou encore cellule de protection et de raccordement à un réseau électrique). La source d'alimentation peut être constituée de plusieurs dispositifs regroupés à l'intérieur du module élémentaire. Chaque module est susceptible d'une alimentation individualisée pour améliorer les performances de la machine dans laquelle il est intégré.

Les enroulements de disques stator sont indépendants et ils peuvent être connectés selon la configuration désirée. La connexion électrique des enroulements des stators entre eux se fait par des connecteurs fixés, sur ou à l'intérieur de la carcasse de la machine. Les enroulements des sous-ensembles rotor sont éventuellement fixés à l'arbre de la machine, sur ou à l'intérieur de celui-ci.

Dans tous les exemples de réalisation décrits précédemment, l'arbre de la machine est entraîné en rotation et la carcasse est fixe.

L'invention peut également s'appliquer à une machine dont l'arbre est fixe et la carcasse tourne. On peut notamment se référer à cet égard à la demande de brevet FR-A-2742937.

## Revendications

1. Module élémentaire indépendant pour machine discoïde, caractérisé en ce qu'il est constitué d'un ou deux sous-ensemble(s) (1) stator (1, 41), comprenant chacun un disque stator et un ou deux sous-ensemble(s) rotor (2, 42) comprenant chacun un disque rotor et au moins un élément de carcasse cylindrique ou polygonal (5, 43) lié au(x) sous-ensemble(s) stator (1, 41), lesdits sous-ensembles étant disposés coaxialement, ledit module élémentaire étant conçu pour s'accoupler avec un module élémentaire adjacent ou un module d'extrémité comportant au moins un flasque.

2. Module élémentaire selon la revendication 1, caractérisé en ce qu'il comprend une portion d'arbre (28), lesdits sous-ensembles étant centrés sur l'axe (37) de ladite portion d'arbre.

3. Module élémentaire selon la revendication 1 ou 2, caractérisé en ce que ledit élément de carcasse (5, 43) comporte une cloison (13) et/ou au moins un bossage (48, 59) sur sa face interne, pour le maintien en position des bobinages statoriques (15, 16).

4. Module élémentaire selon l'une des revendications 1 à 3, caractérisé en ce qu'il comprend sa propre source d'alimentation.

5. Machine électrique discoïde comprenant au moins un module (20, 25, 26, 30, 40) stator/rotor élémentaire indépendant conforme à l'une des revendications 1 à 4 et correspondant à une puissance déterminée et deux modules d'extrémité (70,71) comprenant chacun au moins un flasque d'extrémité (3, 4), lesdits modules élémentaires et d'extrémité étant assemblés mécaniquement de façon à ce qu'ils soient tous centrés sur l'axe (7, 57, 37, 47) de la machine, les éléments de carcasse cylindriques ou polygonaux (5, 43) de chaque module élémentaire étant reliés entre eux et auxdits flasques d'extrémité (3, 4) pour constituer la carcasse de la machine par des moyens de fixation disposés dans des brides (12, 45) portées par lesdits éléments de carcasse et lesdits flasques d'extrémité.

6. Machine électrique discoïde selon la revendication 5, caractérisée en ce que lesdits modules d'extrémité (71, 72) comprennent un élément (73, 74) permettant le retour du flux magnétique.

7. Machine électrique discoïde selon la revendication 5 ou 6, caractérisée en ce que chaque sous-ensemble stator (1, 41) est lié à la carcasse de la machine tandis que chaque sous-ensemble rotor (2, 42) est lié en rotation avec l'arbre (8) de la machine.

8. Machine électrique discoïde selon l'une des revendications 5 à 7, caractérisée en ce que l'arbre de la machine est d'une seule pièce (8, 58) ou constitué de portions d'arbre (28) liées à chaque module élémentaire (30), la longueur de l'arbre étant adaptée au nombre de modules élémentaires.

9. Machine électrique discoïde selon l'une des revendications 5 à 8, caractérisée en ce que les enroulements des sous-ensembles stator sont connectés entre eux par des connecteurs fixés, sur ou à l'intérieur de la carcasse de la machine.

10. Machine électrique discoïde selon l'une des revendications 5 à 9, caractérisé en ce que les enroulements des sous-ensembles rotor sont fixés à l'arbre de la machine, sur ou à l'intérieur de celui-ci.

11. Machine électrique discoïde selon l'une des revendications 5 à 10, caractérisée en ce qu'elle comporte un alternateur d'excitation.

12. Machine électrique discoïde selon la revendication 11, caractérisée en ce que ledit alternateur est du type discoïde.

13. Machine électrique discoïde selon la revendication 12, caractérisée en ce que ledit alternateur d'excitation constitue un module élémentaire (61) comprenant un disque stator (32) centré sur l'axe (67) de la machine, relié à la carcasse et portant des enroulements (34), d'autres enroulements (36) étant prévus sur un module rotor/stator élémentaire (60) de ladite machine, sur une face du disque rotor en regard du disque stator (32).

14. Procédé de fabrication de machines électriques modulaires de type discoïde comprenant :
- un assemblage mécanique de modules élémentaires indépendants (20, 25, 26, 30, 40) conformes à l'une des revendications 1 à 4 et de modules d'extrémité (70, 71) comprenant au moins un flasque d'extrémité (3, 4), de façon à ce qu'ils soient tous disposés coaxialement sur l'axe (7, 57, 37, 47) de la machine et
- un assemblage des éléments de carcasse cylindriques ou polygonaux (5, 43) de chaque module élémentaire et desdits flasques d'extrémité (3, 4) pour constituer la carcasse de la machine, ledit assemblage étant réalisé par des moyens de fixation disposés dans des brides (12, 45) portées par lesdits éléments de carcasse et lesdits flasques d'extrémité.

15. Procédé selon la revendication 14, caractérisé en ce qu'il consiste à assembler également un élément (73, 74) permettant le retour du flux magnétique.

16. Procédé selon la revendication 14 ou 15, caractérisé en ce que les modules élémentaires (20, 25, 26, 40) sont assemblés sur un arbre (8, 58) d'une seule pièce.

17. Procédé selon la revendication 14 ou 15, caractérisé en ce que chaque module élémentaire (30) comporte une portion d'arbre (28), l'assemblage des portions d'arbre étant réalisé lors de l'assemblage des modules.

18. Procédé conforme à l'une des revendications 14 à 17 consistant également à assembler un module élémentaire alternateur d'excitation (61) du type discoïde avec au moins un module élémentaire rotor/stator (60) dont le ou les sous-ensemble(s) rotor (2) sont bobinés.

## Claims

1. Independent elementary module for a discoidal machine, characterized in that it consists of one or two stator (1, 41) sub-assemblie(s) (1) comprising each one a stator disc and one or two rotor sub- assemblie(s) (2,42) comprising each one a rotor disc and at least one cylindrical or polygonal carcase element (5, 43) connected to the stator sub-assembly or sub-assemblies (1,41), the said sub-assemblies being arranged coaxially, the said elementary module being designed for being coupled to one adjacent elementary module or an end module comprising at least one end bearing-plate.

2. Elementary module according to claim 1, characterized in that it comprises a shaft portion (28), the said sub-assemblies being centered onto the axis (37) of the said shaft portion.

3. Elementary module according to claim 1 or 2, characterized in that the said carcase element (5, 43) comprises a partition wall (13) and/or at least one boss (48, 59) on its internal face, for holding the stator coils (15, 16) in position.

4. Elementary module according to one of claims 1 to 3, characterized in that it comprises its own feeding source.

5. Discoïd electric machine comprising at least one independent elementary stator/rotor module (20, 25, 26, 30, 40) according to one of claims 1 to 4 and corresponding to a determined power and an end module (70, 71) comprising each one at least one end bearing-plate (3, 4), the said elementary and end modules being mechanically assembled so that they all be centered on the axis (7, 57, 37, 47) of the machine, the cylindrical or polygonal carcase elements (5, 43) of each elementary module being connected to each other and to the said end bearing-plates (3, 4) for constituting the carcase of the machine by fastening means arranged in clamping flanges (12, 45) carried by the said carcase elements and the said end bearing-plates.

6. Discoïd electric machine according to claim 5, characterized in that the said end modules (71, 72) comprises an element (73, 74) permitting the return of the magnetic flux.

7. Discoïd electric machine according to claim 5 or 6, characterized in that each stator sub-assembly (1, 41) is connected to the carcase of the machine whereas each rotor sub-assembly (2, 42) is bound to for rotation with the shaft (8) of the machine.

8. Discoïd electric machine according to one of claims 5 to 7, characterized in that the shaft of the machine is made in one piece (8, 58) or consists of shaft sections (28) connected to each elementary module (30), the length of the shaft being adapted to the number of elementary modules.

9. Discoïd electric machine according to one of claims 5 to 8, characterized in that the windings of the stator sub-assemblies are connected to each other by connectors fastened onto or inside of the carcase of the machine.

10. Discoïd electric machine according to one of claims 5 to 9, characterized in that the windings of the rotor sub-assemblies are fastened to the shaft of the machine onto or inside of the latter.

11. Discoïd electric machine according to one of claims 5 to 10, characterized in that it comprises an excitation alternator.

12. Discoïd electric machine according to claim 11, characterized in that the said alternator is of the discoïd type.

13. Discoïd electric machine according to claim 12, characterized in that the said excitation alternator constitutes an elementary module (61) comprising a stator disc (32) centered onto the axis (67) of the machine, connected to the carcase and carrying windings (34), other windings (36) being provided on an elementary rotor/stator module (60) of the said machine, onto one face of the rotor disc opposite to the stator disc (32).

14. Method of manufacture of modular electric machines of the discoid type comprising :
- a mechanical assembly of independent elementary modules (20, 25, 26, 30, 40) according to one of claims 1 to 4 and of end modules (70, 71) comprising at least one end bearing-plate (3, 4) so that they all be arranged coaxially on the axis (7, 57, 37, 47) of the machine and
- an assembly of the cylindrical or polygonal carcase elements (5, 43) of each elementary module and of the said end bearing-plates (3, 4) for constituting the carcase of the machine, the said assembly being carried out by fastening means arranged in clamping flanges (12, 45) carried by the said carcase element and the said end bearing-plates.

15. Method according to claim 14, characterized in that it consists in also assembling an element (73, 74) permitting the return of the magnetic flux.

16. Method according to claim 14 or 15, characterized in that the elementary modules (20, 25, 26, 40) are assembled onto a shaft (8, 58) made in one single piece.

17. Method according to claim 14 or 15, characterized in that each elementary module (30) comprises a shaft section (28), the assembly of the shaft sections being carried out during the assembly of the modules.

18. Method according to one of claims 14 to 17, also consisting in assembling an excitation alternator elementary module (61) of the discoid type to at least one elementary rotor/stator module (60) of which the rotor sub-assembly or sub-assemblies (2) are wound.

## Patentansprüche

1. Unabhängiger Elementarmodul für eine scheibenförmige Maschine, dadurch gekennzeichnet, daß er aus einem oder zwei jeweils eine Statorscheibe aufweisende Stator (1, 41) Teilsysteme (1) und aus einem oder zwei jeweils eine Rotorscheibe umfassende Rotorteilsysteme (2, 42) und aus wenigstens einem mit dem Statorteilsystem bzw. den Statorteilsystemen (1, 41) verbundenes zylindrisches oder vieleckiges Gestellelement (5, 43) besteht, wobei die besagten Teilsysteme koaxial angeordnet sind, wobei der Elementarmodul ausgelegt ist, um mit einem anschließenden Elementarmodul oder einem wenigstens ein Flanschlagerschild aufweisenden Endmodul gekuppelt zu werden.

2. Elementarmodul gemäß Anspruch 1, dadurch gekennzeichnet, daß er wenigstens einen Wellenabschnitt (28) umfaßt, wobei die besagten Teilsysteme auf der Achse (37) des besagten Wellenabschnittes zentriert sind.

3. Elementarmodul gemäß Anspruch 1 oder 2, dadurch gekennzeichnet, daß das besagte Gestellelement (5, 43) eine Trennwand (13) und/oder wenigstens einen Ansatzvorsprung (48, 59) an seiner Innenfläche für das Instellunghalten der Statorwicklungen (15,16) aufweist.

4. Elementarmodul gemäß einem der Ansprüche 1 bis 3, dadurch gekennzeichnet, daß er seine eigene Speisequelle umfaßt.

5. Scheibenförmige elektrische Maschine, die wenistens einen einer bestimmten Leistung entsprechenden unabhängigen Elementarstator-/rotormodul (20, 25, 26, 30, 40) gemäß einem der Ansprüche 1 bis 4 und zwei jeweils wenigstens ein Endflanschlagerschild (3, 4) umfassende Endmodule (70, 71) aufweist, wobei die besagten Elementar-und Endmodule mechanisch zusammengebaut sind, damit sie alle auf der Achse (7, 57, 37, 47) der Maschine zentriert sind, wobei die zylindrischen oder vieleckigen Gestellelemente (5, 43) jedes Elementarmoduls miteinander und mit den besagten Endflanschlagerschildern (3,4) verbunden sind, um das Gestell der Maschine durch in von den besagten Gestellelementen und den besagten Endflanschlagerschildern getragenen Flanschen ( 12, 45) angeordnete Befestigungsmittel zu bilden.

6. Scheibenförmige elektrische Maschine gemäß Anspruch 5, dadurch gekennzeichnet, daß die besagten Endmodule (71, 72) ein die Rückführung des magnetischen Flußes gestattendes Element (73, 74 ) umfassen.

7. Scheibenförmige elektrische Maschine gemäß Anspruch 5 oder 6, dadurch gekennzeichnet, daß jedes Statorteilsystem (1, 41) mit dem Gestell der Maschine verbunden ist, während jedes Rotorteilsystem (2, 42) mit der Welle (8) der Maschine drehfest verbunden ist.

8. Scheibenförmige elektrische Maschine gemäß einem der Ansprüche 5 bis 7, dadurch gekennzeichnet, daß die Welle der Maschine einstückig (8, 58) ist oder aus mit jedem Elementarmodul (30) verbundenen Wellenabschnitten (28) besteht, wobei die Länge der Welle an die Anzahl von Elementarmodulen angepaßt ist.

9. Scheibenförmige elektrische Maschine gemäß einem der Ansprüche 5 bis 8, dadurch gekennzeichnet, daß die Wicklungen der Statorteilsysteme aneinander durch an dem Gestell oder innerhalb des Gestelles der Maschine befestigte Verbindungstücke angeschlossen sind.

10. Scheibenförmige elektrische Maschine gemäß einem der Ansprüche 5 bis 9, dadurch gekennzeichnet, daß die Wicklungen der Rotorteilsysteme an der Welle der Maschine auf dieser oder innerhalb derselben befestigt sind.

11. Scheibenförmige elektrische Maschine gemäß einem der Ansprüche 5 bis 10, dadurch gekennzeichnet, daß sie einen Erregungswechselstromerzeuger aufweist.

12. Scheibenförmige elektrische Maschine gemäß Anspruch 11, dadurch gekennzeichnet, daß der besagte Wechselstromerzeuger der scheibenförmigen Bauart ist.

13. Scheibenförmige elektrische Maschine gemäß Anspruch 12, dadurch gekennzeichnet, daß der besagte Erregungwechselstromerzeuger einen Elementarmodul (61) mit einer auf der Achse (67) der Maschine zentrierten, mit dem Gestell verbundenen und Wicklungen (34) tragenden Statorscheibe (32). wobei andere Wicklungen (36) an dem Elementarrotor-/statormodul der besagten Maschine an einer der Statorscheibe (32) gegenüberliegenden Fläche der Rotorscheibe vorgesehen sind.

14. Verfahren zur Herstellung von modularen elektrischen Maschinen der scheibenförmigen Gattung mit :
- einem mechanischen Zusammenbau von unhabängigen Elementarmodulen (20, 25, 26, 30, 40) gemäß einem der Ansprüche 1 bis 4 und von wenigstens ein Endflanschlagerschild (3,4) aufweisenden Endmodulen ( 70, 71), damit sie alle koaxial auf der Achse (7, 57,37,47) der Maschine angeordnet sind und
- einem Zusammenbau der zylindrischen oder vieleckigen Gestellelementen (5,43) jedes Elementarmoduls und der besagten Endflanschlagerschilder (3,4), um das Gestell der Maschine zu bilden, wobei der besagte Zusammenbau durch in von den besagten Gestellelementen und den besagten Endflanschlagerschildern getragenen Verbindungsflanchen (12, 45) angeordnete Befestigtungsmittel durchgeführt wird.

15. Verfahren gemäß Anspruch 14, dadurch gekennzeichnet, daß es darin besteht, ein die Rückfihrung des magetischen Flußes gestattendes Element (73, 74) ebenfalls zusammenzubauen.

16. Verfahren gemäß Anspruch 14 oder 15, dadurch gekennzeichnet, daß die Elementarmodule (20, 25, 26, 40) auf einer einstückigen Welle (8, 58) zusammengebaut werden.

17. Verfahren gemäß Anspruch 14 oder 15, dadurch gekennzeichnet, daß jeder Elementarmodul (30) einen Wellenabschnitt (28) aufweist, wobei der Zusammenbau der Wellenabschnitte während des Zusammenbaus der Module durchgeführt wird.

18. Verfahren gemäß einem der Ansprüche 14 bis 17, das ebenfalls darin besteht, einen einen Erregungswechselstromerzeuger bildenden Elementarmodul (61) der scheibenförmigen Gattung mit wenigstens einem Elementarrotor-/statormodul (60), dessen bzw. deren Rotorteilsystem(e) (2) gewickelt ist bzw. sind, zusammenzubauen.
